Europäisches Patentamt

European Patent Office

Office européen des brevets

(19)

(11) **EP 1 242 486 B1**

(12) **FASCICULE DE BREVET EUROPEEN**

(45) Date de publication et mention
de la délivrance du brevet:
**17.11.2004 Bulletin 2004/47**

(21) Numéro de dépôt: **00986958.7**

(22) Date de dépôt: **29.12.2000**

(51) Int Cl.⁷: $C08F\ 214/28$

(86) Numéro de dépôt international:
**PCT/CA2000/001589**

(87) Numéro de publication internationale:
**WO 2001/049760 (12.07.2001 Gazette 2001/28)**

(54) **ELASTOMERES FLOUOROSULFONES A FAIBLE TG A BASE D'HEXAFLOROPROPENE ET NE CONTENANT NI DU TETRAFLUOROETHYLENE, NI DE GROUPEMENT SILOXANE**

FLUORELASTOMER MIT NIEDRIGER GLASÜBERGANGSTEMPERATUR AUF BASIS VON HEXAFLUOROPROPEN UND FREI VON TETRAFLUOROETHYLEN UND SILOXANGRUPPEN

HEXAFLUOROPROPENE-BASED FLUOROSULFONATED ELASTOMERS WITH A LOW GLASS TRANSITION TEMPERATURE, CONTAINING NEITHER TETRAFLUOROETHYLENE NOR A SILOXANE GROUP

(84) Etats contractants désignés:
**AT BE CH CY DE DK ES FI FR GB GR IE IT LI LU MC NL PT SE TR**

(30) Priorité: **29.12.1999  CA 2293845**
**24.02.2000  CA 2299621**

(43) Date de publication de la demande:
**25.09.2002  Bulletin 2002/39**

(73) Titulaire: **Hydro-Québec**
**Montréal, Québec H2Z 1A4 (CA)**

(72) Inventeurs:
• **AMEDURI, Bruno, Michel**
  **F-34090 Montpellier (FR)**

• **ARMAND, Michel**
  **Montréal, Québec H3T 1N2 (CA)**
• **BOUCHER, Mario**
  **St-Etienne-des-Grès, Québec G0X 2P0 (CA)**
• **MANSERI, Abdellatif**
  **F-34080 Montpellier (FR)**

(74) Mandataire: **Guerre, Dominique**
**Cabinet Germain & Maureau,**
**12 rue Boileau**
**69006 Lyon (FR)**

(56) Documents cités:
**US-A- 5 663 255          US-A- 5 939 502**

## Description

### DOMAINE DE L'INVENTION

La présente invention concerne la synthèse de nouveaux élastomères fluorés possédant de très basses températures de transition vitreuse ($T_g$), une bonne résistance aux acides, au pétrole et aux carburants, de même que de bonnes propriétés de mise en oeuvre. Les élastomères de l'invention contiennent de l'hexafluoropropène (ci-après "HFP"), du perfluoro(4-méthyl-3,6-dioxaoct-7-ène) fluorure de sulfonyle (ci-après "PFSO$_2$F"), et du fluorure de vinylidène (ci-après "VDF") et/ou un éther vinylique perfluoré et/ou un alcène fluoré. Ces élastomères sont préparés par copolymérisation radicalaire de l'HFP avec du PFSO$_2$F ou par terpolymérisation radicalaire de l'HFP avec du PFSO$_2$F et du VDF en présence de différents amorceurs organiques conventionnels, tels que les peroxydes, les peresters, les diazoïques ou les peroxypivalates d'alkyle.

### ART ANTÉRIEUR

Les élastomères fluorés présentent une combinaison unique de propriétés extrêmement avantageuses. Parmi celles-ci, on peut citer leur résistance thermique, à l'oxydation, aux rayons ultraviolets (UV), à la dégradation due au vieillissement, aux agents chimiques corrosifs et aux carburants. Ils possèdent en outre de faibles tensions de surface, constantes diélectriques et indices de réfraction. Par ailleurs, ils résistent à l'absorption d'eau. Toutes ces propriétés en font des matériaux de choix dans diverses applications de hautes technologies telles que les composantes de piles à combustible, les joints d'étanchéité dans le domaine de l'aéronautique, les semi-conducteurs dans la microélectronique, les durites, tuyaux, corps de pompes et diaphragmes dans les industries chimique, automobile et pétrolière.

Cependant, les élastomères à base d'hexafluoropropène (HFP) sont peu nombreux. Même si les élastomères commerciaux tels que les Fluorel®, Dai-El®, FKM®, Technoflon®, Viton®A ou Viton®B (VDF / HFP ou VDF / HFP / TFE) présentent de bonnes résistances chimique et thermique, leurs températures de transition vitreuse ($T_g$) ne sont pas assez basses. Les $T_g$ des produits commerciaux précités varient généralement entre -10 et -25 °C. La plus faible valeur trouvée dans la littérature est celle du Viton®B, soit une $T_g$ de -26 °C, ce qui est surprenant puisque le fabricant annonce une $T_g$ variant entre -5 et -15 °C pour ce produit. Pour concurrencer ces élastomères, la compagnie Ausimont a proposé un copolymère VDF / pentafluoropropène (Technoflon®) résistant aux flammes et à l'oxydation, mais n'ayant pas de $T_g$ inférieure à -26 °C et dont le comonomère est difficile d'accès.

Il est bien connu que les copolymères contenant de l'HFP avec le tétrafluoroéthylène (TFE) sont des thermoplastiques, tandis que l'introduction d'un autre monomère fluoré tel que, par exemple, des éthers trifluorovinyliques apporte le caractère élastomère. DuPont a suggéré une nouvelle génération d'élastomères à base de perfluoroalkyl vinyl éther (PAVE) mais qui ne comprennent pas d'HFP, et qui sont résistants à basses températures. Ainsi, des copolymères ont été produits, tels que le copolymère de tétrafluoroéthylène (TFE) / perfluorométhyl vinyl éther (PMVE) (Kalrez®), dont les $T_g$ ne descendent pas en deçà de -15 °C, les TFE / PMVE décrits dans EP 0 077 998, dont les $T_g$ sont de -9 °C, ou TFE / pevfluoroalkylvinyléther (PAVE) décrits dans US 4.948.853. Mais ce sont surtout les terpolymères qui présentent des $T_g$ encore plus basses. Parmi eux, on note le terpolymère TFE / éthylène / PMVE dont la $T_g$ est de -17 °C, ou le terpolymère TFE / VDF / PAVE (décrit dans EP 0 131 308), et surtout le terpolymère TFE / VDF / PMVE (Viton GLT®) dont la $T_g$ est de -33 °C.

De plus, les élastomères à base de TFE / PAVE / VDF, utilisés comme joints toriques, présentent de très bonnes résistances aux solvants polaires (EP 0 618 241, Ausimont et brevet japonais -A-3066714 Chem. Abstr., 115: 73436z).

La terpolymérisation du TFE avec le PMVE et le $F_2C=CF[OCF_2CF(CF_3)]_nOC_3F_7$ (*Polym. J.*, <u>1985</u>, <u>17</u>, 253) a conduit à des élastomères dont les $T_g$ (de -9 à -76 °C) dépendent de la valeur du nombre n de motifs HFPO et du pourcentage des deux comonomères oxygénés.

Aussi, DuPont a de plus produit des membranes Nafion® par copolymérisation du TFE avec $F_2C=CFOCF_2CF(CF_3)OC_2F_4SO_2F$ (PFSO$_2$F). Par ailleurs, Asahi Glass utilise ce même monomère sulfoné pour la fabrication des membranes Flemion®. D'autres monomères de même fonctionnalité, par exemple le $F_2C=CFOCF_2CF(CF_3)OC_3F_6SO_2F$ (pour les membranes Aciplex®, Asahi Chemical), ou le $CF_2=CFOC_2F_4SO_2F$, ou de fonctionnalité carboxylate le $F_2C=CFO[CF_2CF(CF_3)O]_xC_2F_4CO_2CH_3$ (pour les membranes Nafion® ou Aciplex® lorsque x vaut 1 et pour les membranes Flemion® si x vaut 0) sont aussi utilisées.

La copolymérisation de l'HFP avec d'autres oléfines fluorées est bien connue, mais les oléfines utilisées sont des PAVE, essentiellement du perfluorométhyl vinyl éther (PMVE) ou du 2-bromoperfluoroéthyl perfluorovinyl éther tel que cité dans les brevets EP 410 351 et CA 2.182.328.

De plus, EP 0 525 685 décrit la synthèse de terpolymères HFP / PMVE / VDF conduisant à des élastomères ayant une $T_g$ égale à -27 °C (valeur la plus basse) contrairement à celle des copolymères VDF/HFP dont la $T_g$ est de -23 °C. Aussi, WO 9220743 décrit la synthèse de terpolymères VDF/ HFP / $F_2C=CFO(CF_2)_nCF_3$ (où n varie entre 0 et 5) obtenus en présence d'un agent de transfert (1,4-diiodoperfluorobutane), subséquemment réticulés avec des peroxydes.

Ce sont surtout des tétrapolymères à base de TFE, de VDF, d'HFP et de PAVE qui ont été produits. Par exemple, DE 2.457.102 décrit la préparation de tétrapolymères HFP / PMVE / TFE / VDF par copolymérisation en émulsion. EP 0 525 687 relate la synthèse de polymères HFP / PAVE / VDF / TFE présentant une bonne résistance chimique et une facilité de mise en oeuvre (par exemple, pour le moulage). Des propriétés analogues ont été observées pour des tétrapolymères à base d'HFP / PAVE / VDF et d'oléfines présentant de 2 à 4 atomes de carbone (voir EP 0 570 762). De plus, CA 2.068.754 fait état de pentapolymères HFP / VDF / TFE / PMVE / éthylène dont les $T_g$ varient de -9 à -18 °C, et jusqu'à -28 °C lorsque le monomère $F_2C=CFOC_2F_4Br$ participe aussi à cette polymérisation (hexapolymérisation). De même, des élastomères réticulables à base d'HFP, de VDF, de TFE et du monomère bromé précité ont été décrits dans EP 0 410 351 et dans CA 2.182.328 ou dans les articles *Rubber Chem. Technology,* 1982, 55, 1004 et *Kautsch. Gummi Kunstst.*, 1991, 44, 833.

L'ajout du diène non conjugué $H_2C=CHC_4F_8CH=CH_2$ dans les polymérisations précédentes a permis de favoriser la réticulation de ces élastomères, comme indiqué dans DE 4.137.967 et EP 0 769 521.

Par ailleurs, US 3.282.875 évoque des terpolymères à base d'HFP, de VDF et de $PFSO_2F$ mais contenant une très faible proportion de monomère sulfoné, soit d'environ 1 à 2 %. Il importe de préciser que la concentration de $PFSO_2F$ dans les polymères a été déterminée par analyse élémentaire. Aussi, les $T_g$ des terpolymères ne sont pas mentionnées.

Enfin, des polymérisations à base d'HFP, de PMVE et d'autres alcènes fluorés ont été réalisées en milieu $CO_2$ supercritique (US 5.674.957).

Il serait donc souhaitable de développer de nouveaux élastomères ayant une température de transition vitreuse très basse et obtenus à partir de comonomères peu dispendieux, dont l'HFP. Ces élastomères devraient préférablement être obtenus par un procédé simple ne nécessitant pas de conditions expérimentales dangereuses.

## DIVULGATION DE L'INVENTION

La présente invention concerne des élastomères fluorés ne comprenant ni tétrafluoroéthylène (TFE), ni monomère porteur de groupement siloxane, et présentant des températures de transition vitreuse ($T_g$) comprises entre -36 et -50 °C et comprenant un comonomère d'hexafluoropropène (HFP) et un comonomère de fluorure de perfluorosulfonyle éthoxy propyl vinyl éther (PSEPVE) ou de perfluoro (4-méthyl-3,6-dioxaoct-7-ène) fluorure de sulfonyle ($PFSO_2F$).

Les élastomères fluorés selon l'invention peuvent aussi comprendre du fluorure de vinylidène (VDF) et/ou des alcènes fluorés et/ou des éthers vinyliques perfluorés.

Un autre objet de l'invention est de connaître de façon très précise et sans ambiguïté la composition des copolymères selon l'invention, c'est-à-dire les pourcentages molaires de chacun des comonomères présents dans les copolymères ou les terpolymères.

Dans une mise en oeuvre préférentielle, l'élastomère comprend moins de 50 % en moles de HFP, préférentiellement, de 10 à 35 % en moles, de 15 à 80 % en moles de $PFSO_2F$, et de 0 à 75 % en moles de VDF et/ou d'alcènes fluorés et/ou d'éthers vinylique perfluorés.

L'invention concerne aussi un procédé de préparation d'élastomères fluorés par copolymérisation d'hexafluoropropène (HFP) avec un fluorure de perfluorosulfonyle éthoxy propyl vinyl éther (PSEPVE) ou un perfluoro (4-méthyl-3,6-dioxaoct-7-ène) fluorure de sulfonyle ($PFSO_2F$), caractérisé en ce que la préparation s'effectue par copolymérisation radicalaire en présence d'un amorceur organique à une température comprise entre 20 et 200 °C, pour une période comprise entre 2 et 6 heures environ, et à une pression initiale comprise entre 2 et 100 bars, et on laisse chuter ladite pression au fur et à mesure que les monomères se consomment.

## DESCRIPTION DÉTAILLÉE DE L'INVENTION

Compte tenu de l'état de la technique, l'HFP a été choisi pour la préparation des élastomères de la présente invention, ce dernier étant un alcène moins cher et plus facile à mettre en oeuvre que le TFE. Étant moins coûteux, il peut donc être utilisé en plus grande quantité dans le copolymère, qui pourra comprendre comme second monomère le fluorure de perfluorosulfonyle éthoxy propyl vinyl éther (PSEPVE) ou le perfluoro (4-méthyl-3,6-dioxaoct-7-ène) fluorure de sulfonyle ($PFSO_2F$). L'utilisation d'HFP confère aux polymères formés un caractère élastomère accru et améliore leur résistance aux agents chimiques, au pétrole et à l'oxydation.

La présente invention comprend de plus des terpolymères dans lesquels le troisième comonomère serait préférablement le VDF, ce monomère conduisant à une faible $T_g$, étant peu dispendieux et facile à manipuler, copolymérisable (réactif) en radicalaire; les blocs PVDF dans le polymère apportent de plus une inertie chimique et thermique, ainsi qu'une meilleure résistance au vieillissement.

La présente invention concerne de préférence la synthèse de copolymères élastomères fluorés originaux, à base d'hexafluoropropène et contenant du fluorure de perfluorosulfonyle éthoxy propyl vinyl éther ou du perfluoro (4-méthyl-3,6-dioxaoct-7-ène) fluorure de sulfonyle, et éventuellement d'autres alcènes fluorés, et/ou du fluorure de vinylidène et/ou des éthers vinyliques perfluorés. Parmi les avantages de la présente invention, on note:

-   La synthèse d'élastomères fluorés à base de PSEPVE ou de $PFSO_2F$ et éventuellement de VDF, des alcènes perfluorés et des éthers vinyliques perfluorés est réalisée avec l'HFP au lieu du tétrafluoroéthylène (TFE) qui est beaucoup plus dispendieux.
-   La synthèse des élastomères fluorés de la présente invention ne nécessite pas l'utilisation de monomères porteurs de groupements siloxanes, ces derniers contribuant généralement à une diminution de la $T_g$. Il est bien connu en effet que les siloxanes ont des $T_g$ très basses. Par exemple, les poly(diméthyl siloxane) ont des $T_g$ de -120 °C comme indiqué d'une manière générale dans l'ouvrage suivant : The Siloxane Bond : Physical Properties and Chemical Transformations, M. G. Voronkov, V. P. Mileshkevich, and Yu. A. Yuzhelevskii, Consultants Bureau, New York (1978).
-   Les élastomères fluorés de la présente invention possèdent de très faibles $T_g$ qui, par exemple, varient généralement de -35 à -50 °C, ces élastomères pouvant ainsi trouver des applications dans le domaine de la plasturgie comme agent de mise en oeuvre, ou dans d'autres industries de pointe comme l'aérospatiale, l'électronique ou les industries de l'automobile, pétrolière, ou le transport de fluides très froids tels que l'azote liquide, l'oxygène liquide et l'hydrogène liquide. De plus, des joints de haute résistance thermique peuvent être préparés à partir des présents élastomères. Enfin, ces élastomères peuvent être utilisés pour la fabrication de matériaux dans le domaine de l'énergie, par exemple pour la préparation de composantes de piles à combustible telles que les membranes.

Le champ de la présente invention s'étend à tous les types de procédés généralement utilisés: la polymérisation en émulsion, en miniémulsion, en microémulsion, en masse, en suspension, en microsuspension et en solution. Toutes peuvent être employées selon leur mise en oeuvre conventionnelle, mais la polymérisation en solution a été utilisée de manière préférentielle, pour des raisons de facilité de mise en oeuvre au laboratoire uniquement, car dans le cas de la polymérisation en solution, les pressions d'opération sont peu élevées, soit de l'ordre de 20 à 40 bars. Dans le cas de la polymérisation en émulsion, en masse et en suspension, la pression d'opération est plus élevée, soit de l'ordre de 40 à 100 bars.

Les divers alcènes fluorés employés présentent au plus quatre atomes de carbone et ont la structure $R_1R_2C=CR_3R_4$ où les substituants $R_{1-4}$ sont tels qu'au moins un d'entre eux est fluoré ou perfluoré. Ceci englobe donc : le fluorure de vinyle (VF), le fluorure de vinylidène (VDF), le trifluoroéthylène, le chlorotrifluoroéthylène (CTFE), le bromotrifluoroéthylène, le 1-hydropentafluoropropylène, l'hexafluoroisobutylène, le 3,3,3-trifluoropropène, le 1,2-dichlorodifluoroéthylène, le 2-chloro-1,1-difluoroéthylène, le 1,2-difluoroéthylène, le 1,1-difluorodichloroéthylène et de façon générale tous les composés vinyliques fluorés ou perfluorés. Par ailleurs, des éthers perfluorovinyliques peuvent aussi jouer le rôle de comonomères. Parmi eux, on peut citer les perfluoroalkyl vinyl éthers (PAVE) dont le groupement alkyle possède de un à trois atomes de carbone: par exemple, le perfluorométhyl vinyl éther (PMVE), le perfluoroéthyl vinyl éther (PEVE) et le perfluoropropyl vinyl éther (PPVE). Ces monomères peuvent aussi être des perfluoroalkoxy alkyl vinyl éthers (PAAVE), décrits dans US 3.291.843 et dans les revues *Prog. Polym. Sci.*, M. Yamabe et coll., 1986, 12, 229 et A.L. Logothetis, 1989, 14, 251, tels que le perfluoro(2-n-propoxy)propyl vinyl éther, le perfluoro(2-méthoxy) propyl vinyl éther, le perfluoro(3-méthoxy)propyl vinyl éther, le perfluoro(2-méthoxy)éthyl vinyl éther, le perfluoro (3,6,9-trioxa-5,8-diméthyl)-dodeca-1-ène, le perfluoro(5-méthyl-3,6-dioxo)-1-nonène. De plus, des monomères perfluoroalkoxyalkyl vinyl éthers à extrémités carboxyliques ou à extrémité fluorure de sulfonyle, tel que le perfluoro(4-méthyl-3,6-dioxaoct-7-ène) fluorure de sulfonyle, peuvent aussi être utilisés pour la synthèse d'élastomères fluorés décrite dans la présente invention. Des mélanges de PAVE et PAAVE peuvent être présents dans les copolymères.

Les solvants préférentiels pour effectuer la polymérisation en solution sont avantageusement des solvants conventionnels comprenant :

-   les esters de formule R-COOR' où R et R' sont indépendamment un groupement $C_{1-5}$ alkyle, ou un groupement ester OR" où R" est un alkyle contenant de 1 à 5 atomes de carbone, R pouvant aussi représenter H. Préférentiellement, R = H ou $CH_3$ et R' = $CH_3$, $C_2H_5$, i-$C_3H_7$ ou t-$C_4H_9$.
-   les solvants fluorés du type $ClCF_2CFCl_2$, le perfluoro-n-hexane (n-$C_6F_{14}$), n-$C_4F_{10}$, perfluoro-2-butyl-tétrahydrofuranne (FC 75™); et
-   les solvants usuels comme le 1,2-dichloroéthane, l'isopropanol, le tertiobutanol, l'acétonitrile et le butyronitrile.

Les solvants préférentiels sont l'acétate de méthyle, l'acétonitrile et le perfluoro-n-hexane dans des quantités variables comprises entre 30 et 60 % en poids.

La température de réaction pour la copolymérisation se situe préférablement entre 20 et 200 °C, plus avantageusement entre 55 et 140 °C. La pression à l'intérieur de l'autoclave de polymérisation varie préférablement entre 2 et 100 bars, avantageusement entre 10 et 100 bars, plus précisément entre 20 et 35 bars, selon les conditions expérimentales. Bien que les intervalles ci-dessus soient donnés à titre indicatif, toute personne du métier sera en mesure d'apporter les changements appropriés en fonction des propriétés recherchées pour les élastomères.

Dans le procédé selon l'invention, on peut amorcer la polymérisation à l'intervention des amorceurs usuels de la polymérisation radicalaire. Des exemples représentatifs de tels amorceurs sont les azoïques (tels que l'AIBN), les peroxydicarbonates de dialkyle, le peroxyde d'acétylcyclohexanesulfonyle, le peroxyde de dibenzoyle, les peroxydes d'alkyle, les hydroperoxydes d'alkyle, le peroxyde de dicumyle, les perbenzoates d'alkyle et les peroxypivalates d'alkyle. On donne néanmoins la préférence aux peroxydicarbonates de dialkyle, tels que les peroxydicarbonates de diéthyle et de di-isopropyle et aux peroxypivalates d'alkyle tels que les peroxypivalates de t-butyle et de t-amyle et peroxyde d'alkyle, et plus particulièrement encore, aux peroxypivalates d'alkyle. De préférence, le rapport molaire initial entre l'amorceur et les monomères se situe entre 0,3 et 2 %.

Pour le procédé de polymérisation en émulsion, une large gamme de cosolvants peut être envisagée, les solvants étant présents en diverses proportions dans le mélange avec l'eau, par exemple de 30 à 70 % en poids. De même, des tensioactifs anioniques, cationiques ou non ioniques peuvent être utilisés dans des quantités variant habituellement de 1 à 3 % en poids. Dans le procédé de polymérisation en émulsion ou en suspension, l'eau est généralement utilisée comme milieu réactionnel. Or, les monomères fluorés sont difficilement solubles dans l'eau, d'où la nécessité d'employer des tensioactifs. Par ailleurs, dans le procédé de polymérisation en émulsion ou en suspension, un cosolvant peut être ajouté pour augmenter la solubilité des comonomères fluorés. Dans ce dernier cas, l'acétonitrile, l'acétone ou d'autres alkyle alkyle cétones telle que la méthyl éthyl cétone peuvent, à titre d'exemple, être employés.

Un des procédés de polymérisation utilisé peut être aussi par microémulsion comme décrit dans EP 0 250 767 ou par dispersion, comme indiqué dans US 4.789.717; EP 0 196 904; EP 0 280 312 et EP 0 360 292.

Des agents de transfert de chaîne peuvent être généralement utilisés pour réguler et principalement diminuer les masses molaires des copolymères. Parmi ceux-là, on peut citer des télogènes contenant de 1 à 10 atomes de carbone et possédant des atomes de brome ou d'iode terminaux tels que, par exemple, les composés de type $R_F X$ (où $R_F$ est un groupement perfluoré $R_F = C_n F_{2n+1}$, n = 1-10, X désignant un atome de brome ou d'iode) ou des alcools, des éthers, des esters. Une liste des divers agents de transfert utilisés en télomérisation de monomères fluorés est indiquée dans la revue « Telomerization reactions of Fluoroalkanes », B. Améduri et B. Boutevin dans l'ouvrage « Topics in Current Chemistry » (Ed. R.D. Chambers), vol. 192 (1997) p. 165, Springer Verlag 1997.

Les élastomères de la présente invention peuvent être réticulés en utilisant des systèmes à base de peroxydes et de triallyl(iso)cyanurate quand de tels copolymères contiennent des atomes d'iode et/ou de brome en position terminale de la macromolécule. Des systèmes peroxydiques sont bien connus, tels que ceux décrits dans EP 0 136 596.

Aussi, étant donné la présence des séquences VDF-HFP dans les terpolymères, les élastomères fluorés de ladite invention, peuvent être réticulés par des diamines, des bis-amidoximes ou des polyphénols. Ces réticulations sont décrites dans *Rubber World*, 1960, 142, 103 ; US 4.487.878 ; *Prog. Polym. Sc.*, 1989, 14, 251 ; US 5.668.221 ; *Angew. Makromol. Chem.,* 76/77, 1979, 39 ; *Rubber Age*, 103, 1971.

La vulcanisation de ces élastomères peut être aussi réalisée par des méthodes ioniques telles que celles décrites dans US 3.876.654, US 4.259.463, EP 0 335 705 ou dans la revue *Prog. Polym. Sci.*, 1989, 14, 251. ou dans "Fluoroelastomers. A.Van Cleeff. Dans Modem Fluoropolymers. Édité par John Scheirs. John Wiley & Sons, New York, 1997. pp. 597-614."

Toute la gamme de pourcentages relatifs des divers copolymères synthétisables à partir des monomères fluorés employés, conduisant à la formation des copolymères et des terpolymères fluorés a été étudiée.

Les produits ont été analysés en RMN du $^1$H et du $^{19}$F. Cette méthode d'analyse a permis de connaître sans ambiguïté les pourcentages molaires des comonomères introduits dans les produits. Par exemple, nous avons parfaitement établi à partir des microstructures caractérisées dans la littérature *(Polymer,* 1987, 28, 224 et *J. Fluorine Chem.,* 1996, 78, 145) les relations entre les signaux caractéristiques des copolymères HFP / PFSO$_2$F (voir tableau 1) et des terpolymères HFP / PFSO$_2$F / VDF (tableau 2) en RMN du $^{19}$F et la structure des produits. Les déplacements chimiques des différents groupements fluorés sont indiqués aux tableaux 1 et 2 ci dessous.

Les pourcentages molaires d'HFP et de VDF dans les copolymères et les terpolymères ont été déterminés à partir des équations 1 et 2 respectivement.

Équation 1

$$\% \text{ molaire d'HFP} = \frac{(I_{-71} + I_{-75})/3}{(I_{-83} + I_{-91} + I_{-92} + I_{-93} + I_{-95} + I_{-108} + I_{-110} + I_{-113} + I_{-116} + I_{-127})/(2 + (I_{-71} + I_{-75})/3 + (I_{-112})/2}$$

où $I_{-i}$ est la valeur de l'intégration du signal situé à -i ppm sur le spectre RMN du $19^F$.

Équation 2

$$\% \text{ molaire de VDF} = \frac{(I_{-83} + I_{-91} + I_{-92} + I_{-93} + I_{-95} + I_{-108} + I_{-110} + I_{-113} + I_{-116} + I_{-127}) / 2}{(I_{-83} + I_{-91} + I_{-92} + I_{-93} + I_{-95} + I_{-108} + I_{-110} + I_{-113} + I_{-116} + I_{-127}) / (2 + (I_{-71} + I_{-75}) / 3 + (I_{-112}) / 2}$$

où $I_{-i}$ est la valeur de l'intégration du signal situé à -i ppm sur le spectre RMN du $^{19}F$.

Tableau 1

| Caractérisation RMN du $^{19}F$ des copolymères HFP / PFSO$_2$F | |
|---|---|
| Structure | Déplacement chimique (ppm) |
| -SO$_2$F | +45 |
| -PFSO$_2$F-CF$_2$CF(C$\underline{F}_3$)-PFSO$_2$F- | -71 à -75 |
| -OC$\underline{F}_2$CF(C$\underline{F}_3$)OC$\underline{F}_2$CF$_2$SO$_2$F | -77 à -80 |
| -OCF$_2$CF(CF$_3$)OCF$_2$C$\underline{F}_2$SO$_2$F | -112 |
| -CF$_2$CF(OR$_F$SO$_2$F)-C$\underline{F}_2$CF(OR$_F$SO$_2$F)- | -117 |
| -PFSO$_2$F-C$\underline{F}_2$CF(CF$_3$)-PFSO$_2$F- | -118 |
| -CF$_2$CF(CF$_3$)-C$\underline{F}_2$CF(OR$_F$SO$_2$F)- | -122 |
| -CF(CF$_3$)CF$_2$-CF$_2$C$\underline{F}$(OR$_F$SO$_2$F)- | -125 |
| -OCF$_2$C$\underline{F}$(CF$_3$)OC$_2$F$_4$SO$_2$F | -144 |
| -PFSO$_2$F-CF$_2$C$\underline{F}$(CF$_3$)-PFSO$_2$F- | -175 à -185 |

Tableau 2

| Caractérisation RMN du $^{19}F$ des terpolymères VDF / HFP / PFSO$_2$F | |
|---|---|
| Structure | Déplacement chimique (ppm) |
| -SO$_2$F | +45 |
| -CH$_2$CF$_2$-CF$_2$CF(C$\underline{F}_3$)-CF$_2$CH$_2$- | -71 |
| -CH$_2$CF$_2$-CF$_2$CF(C$\underline{F}_3$)-CH$_2$CF$_2$- | -75 |
| -OC$\underline{F}_2$CF(C$\underline{F}_3$)OC$\underline{F}_2$CF$_2$SO$_2$F | -77 à -80 |
| tBuO-C$\underline{F}_2$CH$_2$- | -83 |
| -CH$_2$C$\underline{F}_2$-CH$_2$C$\underline{F}_2$-CH$_2$CF$_2$- | -91 |
| -CF$_2$CF(R$_F$)-CH$_2$C$\underline{F}_2$-CH$_2$CF$_2$- | -92 |
| -CF$_2$CF(R$_F$)-CH$_2$C$\underline{F}_2$-CH$_2$CF$_2$-CF$_2$CF(R$_F$)- | -93 |
| -CH$_2$C$\underline{F}_2$-CH$_2$CF$_2$-CF$_2$CH$_2$- | -95 |
| -CF$_2$CF(OR$_F$SO$_2$F)-CH$_2$C$\underline{F}_2$-CF$_2$CF(OR$_F$SO$_2$F)- | -108 |
| -CH$_2$CF$_2$-CH$_2$C$\underline{F}_2$-CF$_2$CF(R$_F$)- | -110 |
| -OCF$_2$CF(CF$_3$)OCF$_2$C$\underline{F}_2$SO$_2$F | -112 |
| -CH$_2$CF$_2$-CH$_2$C$\underline{F}_2$-CF$_2$CH$_2$- | -113 |
| -CH$_2$CF$_2$-C$\underline{F}_2$CH$_2$-CH$_2$CF$_2$- | -116 |
| -CH$_2$CF$_2$-C$\underline{F}_2$CF(CF$_3$)-CH$_2$CF$_2$- | -118 |
| -CH$_2$CF$_2$-C$\underline{F}_2$CF(OR$_F$SO$_2$F)-CH$_2$CF$_2$- | -122 |
| -CH$_2$CF$_2$-CF$_2$C$\underline{F}$(OR$_F$SO$_2$F)-CH$_2$CF$_2$- | -125 |
| -CH$_2$CF$_2$-CF$_2$CF(OR$_F$SO$_2$F)-C$\underline{F}_2$CH$_2$- | -127 |
| -OCF$_2$C$\underline{F}$(CF$_3$)OC$_2$F$_4$SO$_2$F | -144 |
| -CH$_2$CF$_2$-CF$_2$C$\underline{F}$(CF$_3$)-CF$_2$CH$_2$- | -183 |
| -CH$_2$CF$_2$-CF$_2$C$\underline{F}$(CF$_3$)-CH$_2$CF$_2$- | -184 |

Les données des tableaux 1 et 2 mettent en évidence des diades HFP / PFSO$_2$F, VDF / PFSO$_2$F et HFP / VDF ainsi que les enchaînements tête-queue et tête-tête des blocs d'unités VDF (respectivement à -91 et -113, -116 ppm).

Les copolymères de telles compositions peuvent trouver des applications dans la préparation de composantes de piles à combustible telles que les membranes, de joints toriques, de corps de pompe, de diaphragmes possédant une très bonne résistance aux carburants, essence, t-butyl méthyl éther, alcools et huile de moteur, combinées à de bonnes propriétés élastomères, en particulier une très bonne résistance aux basses températures. Ces copolymères présentent aussi l'avantage d'être réticulables en présence d'agents conventionnellement utilisés.

Le présent procédé comporte donc plusieurs avantages intéressants, à savoir :

- il est réalisé en mode de fonctionnement en cuvée ;
- il s'effectue en solution et utilise des solvants organiques classiques commercialement disponibles ;
- il comprend une polymérisation radicalaire en présence d'amorceurs classiques également disponibles commercialement.

Les exemples suivants sont donnés afin d'illustrer des mises en oeuvre préférentielles de l'invention, et ne doivent en aucun cas être considérés comme limitant la portée de ladite invention.

Exemple 1

Copolymérisation HFP / PFSO$_2$F (pourcentages molaires initiaux 80,0 / 20,0)

Un tube de Carius en borosilicate et de forte épaisseur (longueur, 150 mm ; diamètre intérieur, 16 mm ; épaisseur, 2.0 mm ; pour un volume total de 14 cm$^3$) contenant 0,1158 g (0,50 mmol) de peroxypivalate de t-butyle à 75 %, 2,21 g (4,96 mmol) de perfluoro(4-méthyl-3,6-dioaoct-7-ène) fluorure de sulfonyle (PFSO$_2$F) et 2,25 g (0,030 mmol) d'acétonitrile est connecté à un système de rampe à vide et purgé trois fois à l'hélium par des cycles vide primaire (100 mm Hg) / hélium. Puis, après cinq cycles au moins de congélation / décongélation pour éliminer l'oxygène dissous dans cette solution, 3,00 g (0,020 mol) d'hexafluoropropène (HFP) sont piégés dans le tube gelé dans un bain d'azote liquide et d'acétone et la masse introduite est déterminée par double pesée. Le tube encore immergé dans le bain froid est scellé puis placé dans la cavité d'un four agité à 75 °C pendant 6 heures.

Après la copolymérisation, le tube est gelé dans l'azote liquide puis ouvert. 1,80 g de gaz n'ayant pas réagi ont été piégés. Ceci permet de déduire le taux de conversion massique de l'HFP selon l'expression :

$$\frac{m_{HFP} - 1,80}{m_{HFP}} = 40\%$$

où m$_{HFP}$ représente la masse d'HFP initialement introduite.

Puis, le liquide jaunâtre obtenu est additionné goutte à goutte dans 35 mL de pentane froid fortement agité. Après avoir été laissé 1 heure à 0-5 °C, le mélange est versé dans une ampoule à décanter. Le surnageant limpide incolore est éliminé tandis que la phase lourde jaune est séchée à 70 °C sous 1 mm de Hg pendant 2 heures. 1,67 g d'un liquide très visqueux et limpide a été obtenu, correspondant à un rendement massique de 32 %. L'analyse en IRTF (IR Nicolet 510 P) de ce copolymère révèle les vibrations caractéristiques suivantes :

IRTF (KBr, cm$^{-1}$) : 1 100 - 1 300 ($\nu_{CF}$) ; 1 465 ($\nu_{SO2F}$).

La composition du copolymère (c'est-à-dire les pourcentages molaires des deux comonomères du copolymère ou des trois comonomères du terpolymère) a été déterminée par RMN du $^{19}$F (200 ou 250 MHz) à température ambiante, l'acétone ou le DMF deutériés étant les solvants de référence. La référence en RMN du $^{19}$F est le CFCl$_3$. Les conditions expérimentales de la RMN étaient les suivantes : 30° de l'angle de « flip », 0,7 s de temps d'acquisition, 5 s de temps de « pulse », 128 « scans » d'accumulation et 5 µs de largeur de « pulse ».

Par ailleurs, cette analyse par RMN du $^{19}$F permet de s'assurer que le copolymère ne contient plus de PFSO$_2$F n'ayant pas réagi, comme le prouve l'absence du signal à -137,5 ppm caractéristique d'un des atomes de fluor éthyléniques du monomère sulfoné.

À titre d'exemple, les différents signaux du spectre RMN du $^{19}$F et leurs attributions sont indiqués dans le tableau 1. On peut s'assurer de la totale réactivité du monomère sulfoné par l'absence du signal caractéristique centré à -137,5 ppm attribué à l'un de ses atomes de fluor éthyléniques. D'après les intégrations des signaux de la RMN correspondant à chaque comonomère, les pourcentages molaires respectifs HFP / PFSO$_2$F dans le copolymère sont 31,8 / 68,2 d'après l'équation 1. Le copolymère à l'aspect d'une résine incolore et présente une T$_g$ de -48 °C. L'analyse thermogravimétrique (ATG) révèle que le copolymère est stable thermiquement. À cet égard, la température enregistrée pour une dégradation de 5 % sous air est de 155 °C (tableau 3).

Exemple 2

Terpolymérisation HFP / VDF / PFSO$_2$F (pourcentages molaires initiaux 23/59/18)

Dans un réacteur de 300 mL en Hastelloy (HC 276), équipé d'une vanne d'introduction de gaz, d'une vanne de relargage, d'un manomètre, d'un disque de rupture en HC 276 et d'une agitation magnétique à 700 tours/min., sont introduits 48,5 g (0,11 mol) de PFSO$_2$F ; 1,10 g (4,7 mmol) de peroxypivalate de t-butyle à 75 % et 149,8 g d'acétate de méthyle. Le réacteur est fermé et son étanchéité est vérifiée. Le cycle suivant est effectué 3 fois : le réacteur est mis sous vide, puis on introduit de l'azote à 10-15 bars. Ces cycles permettent le dégazage de la solution. On effectue alors un vide de 20 mm de Hg dans le réacteur. Le réacteur est alors placé dans un bain acétone / azote liquide afin d'obtenir une température intérieure du réacteur proche de -80 °C. On introduit alors successivement 21,0 g d'HFP (0,14 mol) puis 23,0 g de fluorure de vinylidène (VDF) (0,36 mol) par double pesée du réacteur. Puis ce réacteur est placé dans un bain d'huile progressivement chauffé jusqu'à une température de 75 °C qui est maintenue durant 3 heures. La pression de réaction maximale atteinte est de 13 bars. La chute de pression observée à la température de réaction après 6 heures est de 7 bars. Après réaction, le réacteur est placé dans un bain de glace pendant 30 minutes, puis le dégazage montre une perte de 2,3 g de gaz n'ayant pas réagi, ce qui correspond à un taux de conversion des monomères gazeux d'environ 95 %. Le brut réactionnel est alors traité comme précédemment en précipitant dans le pentane froid, puis séché. La masse de copolymère récupérée est de 68,2 g. Le terpolymère obtenu est un liquide orangé visqueux. Le rendement massique est de 74 %. L'analyse en IRTF (IR Nicolet 510 P) de ce terpolymère révèle les vibrations caractéristiques suivantes :

IRTF (KBr, cm$^{-1}$) : 1 100 - 1 300 ($\nu_{CF}$) ; 1 467 ($\nu_{SO2F}$).

La caractérisation par RMN du $^{19}$F (tableau 2) montre l'absence de trace du monomère sulfoné et a permis de connaître les pourcentages molaires des trois comonomères dans le terpolymère égaux à 10 % d'HFP, 71 % de VDF et 19 % de monomère sulfoné (PFSO$_2$F) d'après les équations 1 et 2. Le terpolymère présente une T$_g$ de -43 °C. L'analyse thermogravimétrique (ATG) révèle que le copolymère est très stable thermiquement. À cet égard, la température enregistrée pour une dégradation de 5 % sous air est de 260 °C (tableau 3).

Les autres copolymérisations HFP / PFSO$_2$F et terpolymérisations HFP / VDF / PFSO$_2$F (détails expérimentaux et résultats) sont résumées dans le tableau 3.

Tableau 3

Conditions opératoires et résultats des polymérisations radicalaires de l'HFP avec le $PFSO_2F$ et le VDF

| Exemple[a] | Masse VDF | Masse HFP | Masse $PFSO_2F$ | Masse solvant | $C_0$ | VDF initial | HFP initial | $PFSO_2F$ initial | VDF copo. | HFP copo. | $PFSO_2F$ copo. | Conversion monomères gazeux | Rendement massique | $T_g$ | $T_{dég}$ 5% air |
|---|---|---|---|---|---|---|---|---|---|---|---|---|---|---|---|
| | (g) | (g) | (g) | (g) | (%) | (% mol.) | (% mol.) | (% mol.) | (% mol.) | (% mol.) | (% mol.) | (%) | (%) | (°C) | (°C) |
| 1 | 0 | 3,00 | 2,21 | 2,25[b] | 2,0 | 0 | 80,0 | 20,0 | 0 | 31,8 | 68,2 | 40 | 32 | -48 | 155 |
| 2 | 23,0 | 21,0 | 48,5 | 150[c] | 1,0 | 59,0 | 23,0 | 18,0 | 71,0 | 10,0 | 19,0 | 95 | 74 | -43 | 260 |
| 3 | 0 | 2,51 | 5,05 | 2,65[b] | 2,0 | 0 | 59,3 | 40,7 | 0 | 21,3 | 78,7 | 11 | 6 | -41 | 150 |
| 4 | 6,0 | 18,0 | 50 | 150[c] | 1,0 | 28,6 | 36,9 | 34,4 | 43,2 | 14,3 | 42,5 | 85 | 58 | -41 | 195 |
| 5 | 5,9 | 42,0 | 41,7 | 150[c] | 1,0 | 19,8 | 60,2 | 20,0 | 46 | 24 | 30,0 | 79 | 25 | -36 | 185 |
| 6 | 1,9 | 22,2 | 45,0 | 150[c] | 1,0 | 10,5 | 53,5 | 36,0 | 31,6 | 17,4 | 51,0 | 68 | 18 | -45 | 205 |
| 7 | 5,9 | 14,0 | 40,0 | 150[c] | 1,0 | 33,5 | 34,0 | 32,5 | 37,7 | 13,2 | 49,1 | 76 | 41 | -38 | 195 |

[a]  Température de 75 °C, durée de 3 à 6 heures, en présence de peroxypivalate de t-butyle

[b]  Acétonitrile

[c]  Acétate de méthyle

$C_0 = [amorceur]_0 / ([HFP]_0 + [VDF]_0 + [PFSO_2F]_0)$. La valeur de $C_0$ varie généralement de 0,1 à 2 %.

EP 1 242 486 B1

Les avantages reliés à la présente invention sont principalement les suivants :

1°) Le procédé de synthèse est réalisé en mode de fonctionnement en cuvée (« batch ») ;
2°) Le procédé dont il est question dans la présente invention s'effectue en solution et utilise des solvants organiques classiques, facilement disponibles dans le commerce ;
3°) Le procédé de ladite invention consiste en une polymérisation radicalaire en présence d'amorceurs classiques, facilement disponibles commercialement ;
4°) Le tétrafluoroéthylène (TFE) n'est pas utilisé dans la présente invention ;
5°) L'oléfine perfluorée qui entre dans la composition des élastomères fluorés préparés par ladite invention est l'hexafluoropropène ; celle-ci est nettement moins coûteuse et beaucoup moins dangereuse que le TFE et confère aux élastomères obtenus une bonne résistance à l'oxydation, aux agents chimiques, aux solvants polaires et au pétrole ;
6°) Les élastomères fluorés dont il est question dans ladite invention peuvent être préparés à partir du monomère $PFSO_2F$ dont la copolymérisation avec l'HFP et la terpolymérisation avec l'HFP et le VDF n'ont jamais fait l'objet de travaux décrits dans la littérature. De plus, ce monomère sulfoné par le biais de sa fonction fluorure de sulfonyle, permet de créer des sites de réticulation dans ces élastomères;
7°) Les élastomères fluorés synthétisés par la dite invention contiennent aussi du fluorure de vinylidène, nettement meilleur marché et moins dangereux que le TFE ; ce monomère permet de faire chuter la température de transition vitreuse ($T_g$) ;
8°) Les élastomères fluorés obtenus par ce procédé présentent de très faibles températures de transition vitreuse, variant de -36 à -48 °C.
9°) Les élastomères fluorés de ladite invention, étant donné la présence des séquences VDF-HFP dans les terpolymères, peuvent être réticulés par des diamines, des bis-amidoximes ou des polyphénols.

Bien que la présente invention ait été décrite à l'aide de mises en oeuvre spécifiques, il est entendu que plusieurs variations et modifications peuvent se greffer aux dites mises en oeuvre, et la présente demande vise à couvrir de telles modifications, usages ou adaptations de la présente invention suivant, en général, les principes de l'invention et incluant toute variation de la présente description qui deviendra connue ou conventionnelle dans le champ d'activité dans lequel se retrouve la présente invention, et qui peut s'appliquer aux éléments essentiels mentionnés ci-dessus, en accord avec la portée des revendications suivantes.

## Revendications

1. Élastomère fluoré sulfoné, ne comprenant ni tétrafluoroéthylène, ni monomère porteur de groupement siloxane, et présentant une température de transition vitreuse ($T_g$) comprise entre -36 et -50 °C, et comprenant un copolymère d'hexafluoropropène (HFP), et de fluorure de perfluorosulfonyle éthoxy propyl vinyl éther (PSEPVE) ou de perfluoro(4-méthyl-3,6-dioxaoct-7-ène)fluorure de sulfonyle ($PFSO_2F$).

2. Élastomère fluoré sulfoné selon la revendication 1 contenant de 20 à 32 % en moles d'HFP et de 80 à 68 % en moles de PSEPVE ou de $PFSO_2F$.

3. Élastomère fluoré sulfoné selon la revendication 1, contenant aussi du fluorure de vinylidène (VDF), et/ou au moins un alcène fluoré et/ou au moins un éther vinylique perfluoré.

4. Élastomère fluoré sulfoné selon la revendication 1, contenant de 10 à 32 % en moles d'HFP, de 19 à 79 % en moles de PSEPVE ou de $PFSO_2F$ et de 0 à 71 % en moles de VDF et/ou d'au moins un alcène fluoré et/ou d'au moins un éther vinylique perfluoré.

5. Élastomère fluoré sulfoné selon les revendications 1, 2, 3 ou 4 pouvant être réticulé.

6. Électrolytes polymères, ionomères, composantes de piles à combustible (telles que les membranes et les joints d'étanchéité), joints, durites, tuyaux, joints toriques, corps de pompe, diaphragmes, têtes de piston pour applications dans les industries aéronautique, pétrolière, automobile, minière, nucléaire et pour la plasturgie comprenant des élastomères selon l'une quelconque des revendications 1 à 5.

7. Procédé de préparation d'élastomères fluorés par copolymérisation d'hexafluoropropène avec un fluorure de perfluorosulfonyle éthoxy propyl vinyl éther (PSEPVE) ou un perfluoro (4-méthyl-3,6-dioxaoct-7-ène) fluorure de sul-

fonyle (PFSO$_2$F), **caractérisé en ce que** la préparation s'effectue par copolymérisation radicalaire en présence d'un amorceur organique à une température comprise ente 20 et 200 °C, pour une période de temps comprise entre 3 et 6 heures, et à une pression initiale comprise entre 2 et 100 bars, et on laisse chuter ladite pression initiale au fur et à mesure que les monomères se consomment.

8. Procédé selon la revendication 7, **caractérisé en ce que** la copolymérisation radicalaire implique aussi au moins le fluorure de vinylidène et/ou au moins un alcène fluoré et/ou au moins un éther vinylique perfluoré.

9. Procédé selon la revendication 8, **caractérisé en ce que** l'éther vinylique perfluoré est un perfluoroalkyl vinyl éther choisi parmi le perfluorométhyl vinyl éther, le perfluoroéthyl vinyl éther et le perfluoropropyl vinyl éther.

10. Procédé selon la revendication 8, **caractérisé en ce que** l'éther vinylique perfluoré est le perfluométhyl vinyl éther ou le perfluoropropyl vinyl éther.

11. Procédé selon la revendication 8, **caractérisé en ce que** l'éther vinylique est un perfluoroalkoxyalkyl vinyl éther choisi parmi le perfluoro(2-n-propoxy)propyl vinyl éther, le perfluoro(2-méthoxy)propyl vinyl éther, le perfluoro (3-méthoxy)propyl vinyl éther, le perfluoro(2-méthoxy)éthyl vinyl éther, le perfluoro(3,6,9-trioxa-5,8-diméthyl)-dodeca-1-ène, le perfluoro(5-méthyl-3,6-dioxo)-1-nonène, seul ou en mélange.

12. Procédé selon la revendication 7, **caractérisé en ce que** la copolymérisation radicalaire s'effectue en solution en présence d'un solvant.

13. Procédé selon la revendication 12, **caractérisé en ce que** le solvant est choisi parmi :

   - les esters de formule R-COOR' où R et R' représentent indépendamment C$_{1-5}$ alkyle ou un groupement OR" où R" représente un groupement alkyle contenant de 1 à 5 atomes de carbone, R pouvant aussi représenter H,
   - les solvants fluorés dont le perfluoro-n-hexane,
   - les solvants usuels choisis parmi l'acétate de méthyle, le 1,2-dichloroéthane, l'isopropanol, le tertiobutanol, l'acétonitrile et le butyronitrile.

14. Procédé selon la revendication 13, **caractérisé en ce que** R = H ou CH$_3$ et R' = CH$_3$, C$_2$H$_5$, i-C$_3$H$_7$ ou t-C$_4$H$_9$.

15. Procédé selon la revendication 13, **caractérisé en ce que** le solvant est un solvant fluoré choisi parmi ClCF$_2$CFCl$_2$, n-C$_6$F$_{14}$, n-C$_4$F$_{10}$ et le perfluoro-2-butyl-tétrahydro-furanne.

16. Procédé selon la revendication 13, **caractérisé en ce que** le solvant est choisi parmi l'acétate de méthyle et l'acétonitrile.

17. Procédé selon la revendication 7, **caractérisé en ce que** la température se situe entre 55 et 80 ° C.

18. Procédé selon la revendication 7, **caractérisé en ce que** la pression initiale est de l'ordre de 10 à 100 bars.

19. Procédé selon la revendication 7, **caractérisé en ce que** la pression initiale se situe entre 20 et 40 bars.

20. Procédé selon la revendication 7, **caractérisé en ce que** la copolymérisation radicalaire s'effectue par polymérisation en émulsion, en miniémulsion, en microémulsion, en masse, en suspension, en microsuspension ou en solution.

21. Procédé selon la revendication 8, **caractérisé en ce que** l'on effectue la copolymérisation de l'hexafluoropropène avec le PSEPVE ou le PFSO$_2$F, au moins un éther vinylique perfluoré et au moins un alcène fluoré, l'alcène fluoré étant un composé de structure R$_1$R$_2$C=CR$_3$R$_4$ où R$_1$, R$_2$, R$_3$ et R$_4$ sont tels qu'au moins un d'entre eux est fluoré ou perfluoré.

22. Procédé selon la revendication 21, **caractérisé en ce que** l'alcène fluoré est choisi parmi le fluorure de vinyle, le trifluoroéthylène, le chlorotrifluoroéthylène, le bromotrifluoroéthylène, le 1-hydropentafluoropropylène, l'hexafluoroisobutylène, le 3,3,3-trifluoropropène, le 1,2-dichlorodifluoroéthylène, le 2-chloro-1,1-difluoroéthylène, le 1,2-difluoroéthylène, le 1,1-difluorodichloroéthylène.

**23.** Procédé selon la revendication 7 **caractérisé en ce que** l'on effectue la copolymérisation en cuvée.

**24.** Procédé selon la revendication 7 **caractérisé en ce que** l'amorceur organique est choisi parmi les composés azoïques, les peroxydicarbonates de dialkyle, les peroxydes d'alkyle, les hydroperoxydes d'alkyle, les perbenzoates de d'alkyle et les peroxypivalates de d'alkyle.

**25.** Procédé selon la revendication 7 **caractérisé en ce que** l'amorceur organique est choisi parmi le peroxyde d'acétylcyclohexanesulfonyle, le peroxyde de dibenzoyle, le peroxyde de dicumyle, le peroxydicarbonate de diéthyle, le peroxydicarbonate de di-isopropyle, le peroxypivalate de t-butyle, le peroxypivalate de t-amyl et le t-butyl cyclohexyl peroxydicarbonate.

**26.** Procédé selon la revendication 7 **caractérisé en ce que** le rapport molaire initial entre l'amorceur et les monomères se situe entre 0,1 et 2 %.

**27.** Procédé selon la revendication 20, **caractérisé en ce que** la copolymérisation s'effectue en émulsion.

**28.** Procédé selon la revendication 27, **caractérisé en ce que** la copolymérisation s'effectue en présence d'un agent tensioactif.

**29.** Procédé selon la revendication 28, **caractérisé en ce que** l'agent tensioactif est anionique, cationique ou non ionique.

**30.** Procédé selon la revendication 29, **caractérisé en ce que** l'agent tensioactif est choisi parmi les sels d'ammonium et des sulfonates perfluorés.

**31.** Procédé selon la revendication 7, **caractérisé en ce que** la copolymérisation s'effectue en présence d'agents de transfert de chaîne.

**Claims**

**1.** Sulphonated fluoroelastomer, comprising neither tetrafluoroethylene nor a monomer carrying a siloxane group and exhibiting a glass transition temperature (Tg) of between -36 and -50°C and comprising a copolymer of hexafluoropropene (HFP) and of perfluoro(ethoxy propyl vinyl ether)sulphonyl fluoride (PSEPVE) or of perfluoro(4-methyl-3,6-dioxaoct-7-ene)sulphonyl fluoride (PFSO$_2$F).

**2.** Sulphonated fluoroelastomer according to Claim 1, comprising from 20 to 32 mol% of HFP and from 80 to 68 mol% of PSEPVE or of PFSO$_2$F.

**3.** Sulphonated fluoroelastomer according to Claim 1, also comprising vinylidene fluoride (VDF) and/or at least one fluoroalkene and/or at least one perfluorovinyl ether.

**4.** Sulphonated fluoroelastomer according to Claim 1, comprising from 10 to 32 mol% of HFP, from 19 to 79 mol% of PSEPVE or of PFSO$_2$F and from 0 to 71 mol% of VDF and/or of at least one fluoroalkene and/or of at least one perfluorovinyl ether.

**5.** Sulphonated fluoroelastomer according to Claims 1, 2, 3 or 4, which can be crosslinked.

**6.** Polymer electrolytes, ionomers, fuel cell components (such as membranes and leaktight seals), seals, hoses, pipes, O-rings, pump bodies, diaphragms or piston heads for applications in the aeronautical, oil, motor vehicle, mining or nuclear industries and for plastics technology, comprising elastomers according to any one of Claims 1 to 5.

**7.** Process for the preparation of fluoroelastomers by copolymerization of hexafluoropropene with a perfluoro(ethoxy propyl vinyl ether)sulphonyl fluoride (PSEPVE) or a perfluoro(4-methyl-3,6-dioxaoct-7-ene)sulphonyl fluoride (PFSO$_2$F), **characterized in that** the preparation is carried out by radical copolymerization in the presence of an organic initiator at a temperature of between 20 and 200°C for a period of time of between 3 and 6 hours and at an initial pressure of between 2 and 100 bar, and the said initial pressure is allowed to fall as the monomers are consumed.

8. Process according to Claim 7, **characterized in that** the radical copolymerization also involves at least vinylidene fluoride and/or at least one fluoroalkene and/or at least one perfluorovinyl ether.

9. Process according to Claim 8, **characterized in that** the perfluorovinyl ether is a perfluoroalkyl vinyl ether chosen from perfluoromethyl vinyl ether, perfluoroethyl vinyl ether and perfluoropropyl vinyl ether.

10. Process according to Claim 8, **characterized in that** the perfluorovinyl ether is perfluoromethyl vinyl ether or perfluoropropyl vinyl ether.

11. Process according to Claim 8, **characterized in that** the vinyl ether is a perfluoroalkoxyalkyl vinyl ether chosen from perfluoro(2-(n-propoxy)propyl) vinyl ether, perfluoro(2-methoxypropyl) vinyl ether, perfluoro(3-methoxypropyl) vinyl ether, perfluoro(2-methoxyethyl) vinyl ether, perfluoro(3,6,9-trioxa-5,8-dimethyldodec-1-ene) or perfluoro (5-methyl-3,6-dioxa-1-nonene), alone or as a mixture.

12. Process according to Claim 7, **characterized in that** the radical copolymerization is carried out in solution in the presence of a solvent.

13. Process according to Claim 12, **characterized in that** the solvent is chosen from:

   - esters of formula R-COOR' where R and R' independently represent $C_{1-5}$ alkyl or an OR" group where R" represents an alkyl group comprising from 1 to 5 carbon atoms, it also being possible for R to represent H,
   - fluorinated solvents, including perfluoro-n-hexane,
   - conventional solvents chosen from methyl acetate, 1,2-dichloroethane, isopropanol, tert-butanol, acetonitrile and butyronitrile.

14. Process according to Claim 13, **characterized in that** R = H or $CH_3$ and R' = $CH_3$, $C_2H_5$, i-$C_3H_7$ or t-$C_4H_9$.

15. Process according to Claim 13, **characterized in that** the solvent is a fluorinated solvent chosen from $ClCF_2CFCl_2$, n-$C_6F_{14}$, n-$C_4F_{10}$ and perfluoro-2-butyltetrahydrofuran.

16. Process according to Claim 13, **characterized in that** the solvent is chosen from methyl acetate and acetonitrile.

17. Process according to Claim 7, **characterized in that** the temperature lies between 55 and 80°C.

18. Process according to Claim 7, **characterized in that** the initial pressure is of the order of 10 to 100 bar.

19. Process according to Claim 7, **characterized in that** the initial pressure lies between 20 and 40 bar.

20. Process according to Claim 7, **characterized in that** the radical copolymerization is carried out by emulsion, miniemulsion, microemulsion, bulk, suspension, microsuspension or solution polymerization.

21. Process according to Claim 8, **characterized in that** the copolymerization of hexafluoropropene with PSEPVE or $PFSO_2F$, at least one perfluorovinyl ether and at least one fluoroalkene is carried out, the fluoroalkene being a compound with the structure $R_1R_2C=CR_3R_4$ where $R_1$, $R_2$, $R_3$ and $R_4$ are such that at least one of them is fluorinated or perfluorinated.

22. Process according to Claim 21, **characterized in that** the fluoroalkene is chosen from vinyl fluoride, trifluoroethylene, chlorotrifluoroethylene, bromotrifluoroethylene, 1-hydropentafluoropropylene, hexafluoroisobutylene, 3,3,3-trifluoropropene, 1,2-dichlorodifluoroethylene, 2-chloro-1,1-difluoroethylene, 1,2-difluoroethylene or 1,1-difluorodichloroethylene.

23. Process according to Claim 7, **characterized in that** the copolymerization is carried out batchwise.

24. Process according to Claim 7, **characterized in that** the organic initiator is chosen from azo compounds, dialkyl peroxydicarbonates, alkyl peroxides, alkyl hydroperoxides, alkyl perbenzoates and alkyl peroxypivalates.

25. Process according to Claim 7, **characterized in that** the organic initiator is chosen from acetylcyclohexanesulphonyl peroxide, dibenzoyl peroxide, dicumyl peroxide, diethyl peroxydicarbonate, diisopropyl peroxydicarbonate, t-butyl peroxypivalate, t-amyl peroxypivalate and t-butyl cyclohexyl peroxydicarbonate.

26. Process according to Claim 7, **characterized in that** the initial molar ratio of the initiator to the monomers lies between 0.1 and 2%.

27. Process according to Claim 20, **characterized in that** the copolymerization is carried out as an emulsion copolymerization.

28. Process according to Claim 27, **characterized in that** the copolymerization is carried out in the presence of a surface-active agent.

29. Process according to Claim 28, **characterized in that** the surface-active agent is anionic, cationic or nonionic.

30. Process according to Claim 29, **characterized in that** the surface-active agent is chosen from salts of ammonium and perfluorosulphonates.

31. Process according to Claim 7, **characterized in that** the copolymerization is carried out in the presence of chain-transfer agents.


**Patentansprüche**

1. Sulfoniertes Fluorelastomer, das weder Tetrafluorethylen noch Monomere mit Siloxangruppen enthält und eine Glasübergangstemperatur ($T_g$) zwischen -36 und -50°C aufweist, bei dem es sich um ein Copolymer von Hexafluorpropen (HFP) und Perfluor(ethoxypropylvinylether)sulfonylfluorid (PSEPVE) oder Perfluor(4-methyl-3,6-dioxaoct-7-en)sulfonylfluorid ($PFSO_2F$) handelt.

2. Sulfoniertes Fluorelastomer nach Anspruch 1, enthaltend 20 bis 32 Mol-% HFP und 80 bis 68 Mol-% PSEPVE oder $PFSO_2F$.

3. Sulfoniertes Fluorelastomer nach Anspruch 1, ferner enthaltend Vinylidenfluorid (VDF) und/oder mindestens ein Fluoralken und/oder mindestens einen Perfluorvinylether.

4. Sulfoniertes Fluorelastomer nach Anspruch 1, enthaltend 10 bis 32 Mol-% HFP, 19 bis 79 Mol-% PSEPVE oder $PFSO_2F$ und 0 bis 71 Mol-% VDF und/oder mindestens eines Fluoralkens und/oder mindestens eines Perfluorvinylethers.

5. Sulfoniertes Fluorelastomer nach Anspruch 1, 2, 3 oder 4, das vernetzt werden kann.

6. Polymerelektrolyte, Ionomere, Komponenten von Brennstoffzellen (wie Membranen und Dichtungen), Verbindungen, Schläuche, Rohre, O-Ringe, Pumpengehäuse, Diaphragmen und Kolbenböden für Anwendungen in der Luft- und Raumfahrt, in der Erdölindustrie, in der Automobilindustrie, im Bergbau, in der Nuklearindustrie und in der Kunststofftechnik, die Elastomere nach einem der Ansprüche 1 bis 5 enthalten.

7. Verfahren zur Herstellung von Fluorelastomeren durch Copolymerisation von Hexafluorpropen mit einem Perfluor(ethoxypropylvinylether)-sulfonylfluorid (PSEPVE) oder Perfluor(4-methyl-3,6-dioxaoct-7-en)sulfonylfluorid ($PFSO_2F$), **dadurch gekennzeichnet, daß** man hierzu eine radikalische Copolymerisation in Gegenwart eines organischen Initiators bei einer Temperatur zwischen 20 und 200°C über einen Zeitraum zwischen 3 und 6 Stunden und bei einem Anfangsdruck zwischen 2 und 100 bar durchführt und den Anfangsdruck so schnell sinken läßt, wie die Monomere verbraucht werden.

8. Verfahren nach Anspruch 7, **dadurch gekennzeichnet, daß** man bei der radikalischen Copolymerisation außerdem auch noch mindestens Vinylidenfluorid und/oder mindestens ein Fluoralken und/oder mindestens einen Perfluorvinylether mitverwendet.

9. Verfahren nach Anspruch 8, **dadurch gekennzeichnet, daß** es sich bei dem Perfluorvinylether um einen unter Perfluormethylvinylether, Perfluorethylvinylether und Perfluropropylvinylether ausgewählten Perfluoralkylvinylether handelt.

10. Verfahren nach Anspruch 8, **dadurch gekennzeichnet, daß** es sich bei dem Perfluorvinylether um Perfluormethylvinylether oder Perfluorpropylvinylether handelt.

11. Verfahren nach Anspruch 8, **dadurch gekennzeichnet, daß** es sich bei dem Vinylether um einen unter Perfluor (2-n-propoxy)propylvinylether, Perfluor(2-methoxy)propylvinylether, Perfluor(3-methoxy)-propylvinylether, Perfluor(2-methoxy)ethylvinylether, Perfluor(3,6,9-trioxa-5,8-dimethyl)dodeca-1-en und Perfluro(5-methyl-3,6-dioxa)-1-nonen für sich alleine oder Gemisch ausgewählten Perfluoralkoxyalkylvinylether handelt.

12. Verfahren nach Anspruch 7, **dadurch gekennzeichnet, daß** man die radikalische Copolymerisation in Lösung in Gegenwart eines Lösungsmittels durchführt.

13. Verfahren nach Anspruch 12, **dadurch gekennzeichnet, daß** man das Lösungsmittel unter:

- Estern der Formel R-COOR', worin R und R' unabhängig voneinander für $C_{1-5}$-Alkyl oder eine Gruppe OR", worin R" eine Alkylgruppe mit 1 bis 5 Kohlenstoffatomen bedeutet, stehen und R auch für H stehen kann,
- fluorierten Lösungsmitteln einschließlich Perfluor-n-hexan,
- unter Essigsäuremethylester, 1,2-Dichlorethan, Isopropanol, tert.-Butanol, Acetonitril und Butyronitril ausgewählten üblichen Lösungsmitteln auswählt.

14. Verfahren nach Anspruch 13, **dadurch gekennzeichnet, daß** R = H oder $CH_3$ und R' = $CH_3$, $C_2H_5$, i-$C_3H_7$ oder t-$C_4H_9$.

15. Verfahren nach Anspruch 13, **dadurch gekennzeichnet, daß** es sich bei dem Lösungsmittel um ein unter $ClCF_2CFCl_2$, n-$C_6F_{14}$, n-$C_4F_{10}$ und Perfluor-2-butyltetrahydrofuran ausgewähltes fluoriertes Lösungsmittel handelt.

16. Verfahren nach Anspruch 13, **dadurch gekennzeichnet, daß** man das Lösungsmittel unter Essigsäuremethylester und Acetonitril auswählt.

17. Verfahren nach Anspruch 7, **dadurch gekennzeichnet, daß** die Temperatur zwischen 55 und 80°C liegt.

18. Verfahren nach Anspruch 7, **dadurch gekennzeichnet, daß** der Anfangsdruck etwa 10 bis 100 bar beträgt.

19. Verfahren nach Anspruch 7, **dadurch gekennzeichnet, daß** der Anfangsdruck zwischen 20 und 40 bar liegt.

20. Verfahren nach Anspruch 7, **dadurch gekennzeichnet, daß** man die radikalische Copolymerisation durch Emulsions-, Miniemulsions-, Mikroemulsions-, Masse-, Suspensions-, Mikrosuspensions- oder Lösungspolymerisation durchführt.

21. Verfahren nach Anspruch 8, **dadurch gekennzeichnet, daß** man die Copolymerisation von Hexafluorpropen mit PSEPVE oder $PFSO_2F$, mindestens einem Perfluorvinylether und mindestens einem Fluoralken durchführt, wobei es sich bei dem Fluoralken um eine Verbindung der Struktur $R_1R_2C=CR_3R_4$, worin mindestens einer der Reste $R_1$, $R_2$, $R_3$ und $R_4$ fluoriert oder perfluoriert ist, handelt.

22. Verfahren nach Anspruch 21, **dadurch gekennzeichnet, daß** man das Fluoralken unter Vinylfluorid, Trifluorethylen, Chlortrifluorethylen, Bromtrifluorethylen, 1-Hydropentafluorpropylen, Hexafluorisobutylen, 3,3,3-Trifluorpropen, 1,2-Dichlordifluorethylen, 2-Chlor-1,1-difluorethylen, 1,2-Difluorethylen und 1,1-Difluordichlorethylen auswählt.

23. Verfahren nach Anspruch 7, **dadurch gekennzeichnet, daß** man die Copolymerisation diskontinuierlich durchführt.

24. Verfahren nach Anspruch 7, **dadurch gekennzeichnet, daß** man den organischen Initiator unter Azoverbindungen, Dialkylperoxydicarbonaten, Alkylperoxiden, ALkylhydroperoxiden, Alkylperbenzoaten und Alkylperoxypivalaten auswählt.

**25.** Verfahren nach Anspruch 7, **dadurch gekennzeichnet, daß** man den organischen Initiator unter Acetylcyclohexansulfonylperoxid, Dibenzoylperoxid, Dicumylperoxid, Diethylperoxydicarbonat, Diisopropylperoxydicarbonat, t-Butylperoxypivalat, t-Amylperoxypivalat und t-Butylcyclohexylperoxydicarbonat auswählt.

**26.** Verfahren nach Anspruch 7, **dadurch gekennzeichnet, daß** das Anfangsmolverhältnis zwischen dem Initiator und den Monomeren zwischen 0,1 und 2% liegt.

**27.** Verfahren nach Anspruch 20, **dadurch gekennzeichnet, daß** man die Copolymerisation in Emulsion durchführt.

**28.** Verfahren nach Anspruch 27, **dadurch gekennzeichnet, daß** man die Copolymerisation in Gegenwart eines Tensids durchführt.

**29.** Verfahren nach Anspruch 28, **dadurch gekennzeichnet, daß** das Tensid anionisch, kationisch oder nichtionisch ist.

**30.** Verfahren nach Anspruch 29, **dadurch gekennzeichnet, daß** man das Tensid unter Ammoniumsalzen und Perfluorsulfonaten auswählt.

**31.** Verfahren nach Anspruch 7, **dadurch gekennzeichnet, daß** man die Copolymerisation in Gegenwart von Kettenübertragungsmitteln durchführt.